(19) Europäisches Patentamt
European Patent Office
Office européen des brevets

(11) **EP 2 763 218 B1**

(12) **EUROPEAN PATENT SPECIFICATION**

(45) Date of publication and mention
of the grant of the patent:
**31.08.2016 Bulletin 2016/35**

(51) Int Cl.:
*C01G 53/00* (2006.01)      *H01M 4/04* (2006.01)
*H01M 4/131* (2010.01)     *H01M 4/1391* (2010.01)
*H01M 4/36* (2006.01)      *H01M 4/505* (2010.01)
*H01M 4/525* (2010.01)     *H01M 4/62* (2006.01)
*H01M 4/02* (2006.01)      *H01M 10/0525* (2010.01)

(21) Application number: **12834643.4**

(22) Date of filing: **18.09.2012**

(86) International application number:
**PCT/KR2012/007457**

(87) International publication number:
**WO 2013/048048 (04.04.2013 Gazette 2013/14)**

(54) **CATHODE ACTIVE MATERIAL FOR A LITHIUM SECONDARY BATTERY, METHOD FOR MANUFACTURING SAME, AND LITHIUM SECONDARY BATTERY INCLUDING SAME**

KATHODENMATERIAL FÜR EINE LITHIUMSEKUNDÄRBATTERIE, HERSTELLUNGSVERFAHREN DAFÜR UND LITHIUMSEKUNDÄRBATTERIE DAMIT

MATÉRIAU ACTIF DE CATHODE POUR UNE PILE SECONDAIRE AU LITHIUM, PROCÉDÉ DE FABRICATION CORRESPONDANT ET PILE SECONDAIRE AU LITHIUM COMPRENANT CE MATÉRIAU ACTIF DE CATHODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011   KR 20110097058**

(43) Date of publication of application:
**06.08.2014   Bulletin 2014/32**

(73) Proprietor: **Korea Electronics Technology Institute**
**Kyunggi-do 463-816 (KR)**

(72) Inventors:
• **SONG, Jun Ho**
**Seongnam-si**
**Gyeonggi-do 463-727 (KR)**
• **KIM, Young Jun**
**Yongin-si**
**Gyeonggi-do 446-913 (KR)**
• **KIM, Jeom-Soo**
**Hwaseong-si**
**Gyeonggi-do 445-984 (KR)**
• **CHO, Woo Suk**
**Seongnam-si**
**Gyeonggi-do 463-400 (KR)**
• **KIM, Jae-Hun**
**Yongin-si**
**Gyeonggi-do 448-520 (KR)**
• **KIM, Jin Hwa**
**Seongnam-si**
**Gyeonggi-do 463-816 (KR)**

(74) Representative: **Land, Addick Adrianus Gosling et al**
**Arnold & Siedsma**
**Bezuidenhoutseweg 57**
**2594 AC Den Haag (NL)**

(56) References cited:
**EP-A1- 1 447 866**        **WO-A2-2010/042434**
**JP-A- 2003 346 806**      **JP-A- 2003 346 806**
**KR-A- 20080 099 132**     **KR-A- 20080 099 132**
**US-A1- 2007 160 906**     **US-A1- 2011 017 528**
**US-A1- 2011 121 240**

**Description**

## BACKGROUND OF THE INVENTION

**(a) Field of the Invention**

A positive active material for a secondary lithium battery, a preparation method thereof, and a secondary lithium battery including the same are disclosed.

**(b) Description of the Related Art**

As use of small portable electric/electronic devices has widely increased, a new secondary battery such as a nickel hydrogen battery or a secondary lithium battery has been actively developed. The secondary lithium battery uses carbon such as graphite and the like as a negative active material, a metal oxide including lithium as a positive active material, and a non-aqueous solvent as an electrolyte solution. The lithium is a metal having high ionization tendency and may realize a high voltage, and thus is used to develop a battery having high energy density.

The secondary lithium batteries mainly use a lithium transition metal oxide including lithium as a positive active material, and specifically, 90 % or more use a layered lithium transition metal oxide such as cobalt-based and nickel-based lithium transition metal oxides, a three component-based lithium transition metal oxide in which cobalt, nickel, and manganese coexist, and the like.

KR 2008 0099132 A discloses a positive electrode active material comprising $Li_aNi_xCo_yMn_zM_{1-x-y-z}O_2Q_\sigma$ ($1.0 \leq a \leq 1.2$, $0.0 \leq x \leq 0.95$, $0.0 \leq y \leq 0.7$, $0.0 \leq z \leq 0.7$, $0.0 \leq 1-x-y-z \leq 0.3$, $0.0 \leq \sigma \leq 0.1$), and a coating material comprising a metal fluoride..

US 2007/160906 A1 discloses a positive electrode active material comprising $Li_aNi_xMn_yCo_zO_2$ ($0 < a \leq 1.2$, $0.10 \leq x \leq 0.45$, $0.45 \leq y \leq 0.80$, $0.1 \leq z \leq 0.3$, $x+y+z=1$), and specifically $Li_{1.2}Ni_{0.2}Mn_{0.5}Co_{0.3}O_2$.

US 2011/017528 A1 reveals a lithium ion battery based on a positive active material comprising $Li_{1+x}Ni_aMn_bCo_cM_dO_2$ ($0.05 \leq x \leq 0.25$, $0.1 \leq a \leq 0.4$, $0.3 \leq b \leq 0.65$, $0.05 \leq c \leq 0.4$ and $0 \leq d \leq 0.1$) and a metal fluoride coating.

JP 2003 346806 A (Sony Corp., 05.12.2003 describes a positive electrode active material with chemical formula $Li_xNi_yM_{1-y}O_2$ where M is an element selected from a group consisting of Mn, Co, Cr, Al, Mg and B.

EP 1 447 866 A1 discloses a positive active material for lithium secondary batteries represented by the composite formula $Li_xMn_aNi_bCo_cO_2$ having a $\alpha$-NaFeO₂ structure and having a discharge capacity of about 150 mAh/g. However, the layered lithium transition metal oxide that is widely used as a conventional positive active material has reversible capacity of less than or equal to 200 mAh/g$^{-1}$ and thus has a limit in terms of energy density. Accordingly, in order to solve the problem of a secondary lithium battery due to the limited reversible capacity of a positive electrode, research on a lithium-rich layered oxide (OLO) excessively including lithium instead of the layered lithium transition metal oxide being undertaken.

A positive active material including the lithium-rich layered oxide has a solid solution structure in which a $Li_2MnO_3$ phase is combined with the conventional layered lithium transition metal oxide, and may realize high capacity of greater than or equal to 200 mAh/g$^{-1}$ since oxygen is dissociated from the $Li_2MnO_3$, and lithium is extracted therefrom when initially charged at 4.6 V.

However, the lithium-rich layered oxide is necessarily charged at an initial high voltage for electrochemical activation, but the lithium-rich-based composite metal oxide reacts with an electrolyte solution during the high voltage charge and thus deteriorates the positive active material and aggravates manganese (Mn) elution at a high temperature and a high voltage, and resultantly deteriorates battery performance and cycle-life characteristics.

Accordingly, the present invention provides a positive active material having excellent cycle-life characteristics by surface-modifying a lithium-rich-based composite metal oxide in order to solve the conventional problem, and a secondary lithium battery including the same.

## SUMMARY OF THE INVENTION

One embodiment of the present invention provides a positive active material suppressing deterioration and manganese elution during charge and discharge by suppressing a side reaction between the positive active material and an electrolyte solution.

Another embodiment of the present invention provides a novel method of preparing the positive active material.

Yet another embodiment of the present invention provides a secondary battery using the positive active material and having excellent cycle characteristics and discharge capacity of greater than or equal to 220 mAh/g$^{-1}$.

One embodiment of the present invention provides a positive active material for a secondary lithium battery, including: a lithium metal composite oxide core represented by the following Chemical Formula 1; and a coating layer positioned on the lithium metal composite oxide core and including a fluorine compound.

[Chemical Formula 1]     $Li_wNi_xCo_yMn_{1-x-y-z}M_zO_2$

In the above Chemical Formula 1, $1.2 \leq w \leq 1.5$, $0 < x < 1$, $0 \leq y < 1$, $0.5 \leq 1-x-y-z$, and M is at least one metal selected from the group consisting of Al, Mg, Fe, Cu, Zn, Cr, Ag, Ca, Na, K, In, Ga, Ge, V, Mo, Nb, Si, Ti, and Zr.

The fluorine compound may be one or more selected from the group consisting of CsF, KF, LiF, NaF, RbF, TiF, AgF, $AgF_2$, $BaF_2$, $CaF_2$, $CuF_2$, $CdF_2$, $FeF_2$, $HgF_2$, $Hg_2F_2$, $MnF_2$, $MgF_2$, $NiF_2$, $PbF_2$, $SnF_2$, $SrF_2$, $XeF_2$, $ZnF_2$, $AlF_3$, $BF_3$, $BiF_3$, $CeF_3$, $CrF_3$, $DyF_3$, $EuF_3$, $GaF_3$, $GdF_3$, $FeF_3$, $HoF_3$, $InF_3$, $LaF_3$, $LuF_3$, $MnF_3$, $NdF_3$, $VOF_3$, $PrF_3$, $SbF_3$, $ScF_3$, $SmF_3$, $TbF_3$, $TiF_3$, $TmF_3$, $YF_3$, $YbF_3$, $TlF_3$, $CeF_3$, $GeF_3$, $HfF_3$, $SiF_3$, $SnF_3$, $TiF_4$, $VF_4$, $ZrF_4$, $NbF_5$, $SbF_5$, $TaF_5$, $BiF_5$, $MoF_5$, $ReF_5$, $SF_5$, and $WF_5$.

The coating layer may be included in an amount of about 0.2 to about 1.5 wt% based on the total weight of the lithium metal composite oxide core.

The coating layer may have a thickness of about 5 to about 20 nm.

The coating layer may further include $ZrO_2$, $SnO_2$, or a mixture thereof.

The lithium metal composite oxide core may have an average particle diameter (D50) of about 10 to about 20 $\mu$m.

In the above Chemical Formula 1, w may be about 1.3 to about 1.5.

The lithium metal composite oxide core may be one selected from the group consisting of $Li_{1.3}Ni_{0.2}Co_{0.1}Mn_{0.7}O_2$, $Li_{1.3}Ni_{0.25}Mn_{0.75}O_2$, $Li_{1.3}Ni_{0.25}Co_{0.05}Mn_{0.7}O_2$, and $Li_{1.3}Ni_{0.2}Co_{0.1}Al_{0.05}Mn_{0.65}O_2$.

Another embodiment of the present invention provides a method of preparing the positive active material including: a) providing a lithium metal composite oxide core represented by the following Chemical Formula 1

[Chemical Formula 1]     $Li_wNi_xCo_yMn_{1-x-y-z}M_zO_2$

wherein $1.2 \leq w \leq 1.5$, $0 < x < 1$, $0 \leq y < 1$, $0.5 \leq 1-x-y-z$, and M is at least one metal selected from the group consisting of Al, Mg, Fe, Cu, Zn, Cr, Ag, Ca, Na, K, In, Ga, Ge, V, Mo, Nb, Si, Ti, and Zr;

b) preparing a solution including a fluorine compound; c) coating the fluorine compound included in the solution of b) on the lithium metal composite oxide core of a); and d) heat-treating the coated lithium metal composite oxide in the step c).

The solution including the fluorine compound may be evaporated at about 120 to about 150 ° C after coating the solution including the fluorine compound on the lithium metal composite oxide in the step c).

The heat-treating of the step d) may be performed at about 380 to about 460 ° C for about 1 to about 10 hours.

The lithium metal composite oxide core may be coated to have a thickness of about 5 to about 20 nm in the step b).

The solution including the fluorine compound in the step b) may further include $ZrO_2$, $SnO_2$, or a mixture thereof.

Another embodiment of the present invention provides a secondary lithium battery that includes: a positive electrode including a positive active material; a negative electrode including a negative active material being capable of intercalating and deintercalating lithium ions; a separator interposed between the positive electrode and the negative electrode; and a non-aqueous electrolyte, wherein the battery has a discharge capacity of greater than or equal to 220 $mAh/g^{-1}$.

The positive active material including the lithium metal composite oxide core coated with the fluorine compound may be suppressed from a side reaction between the lithium metal composite oxide and an electrolyte solution, and thus from manganese elution and deterioration.

According to the method of preparing the positive active material for a secondary lithium battery, the fluorine compound may be uniformly coated on the surface of the lithium metal composite oxide core.

In addition, a secondary lithium battery using the positive active material prepared according to the method realizes discharge capacity of greater than or equal to 220 $mAhg^{-1}$, and simultaneously has excellent cycle-life characteristics.

## BRIEF DESCRIPTION OF THE DRAWINGS

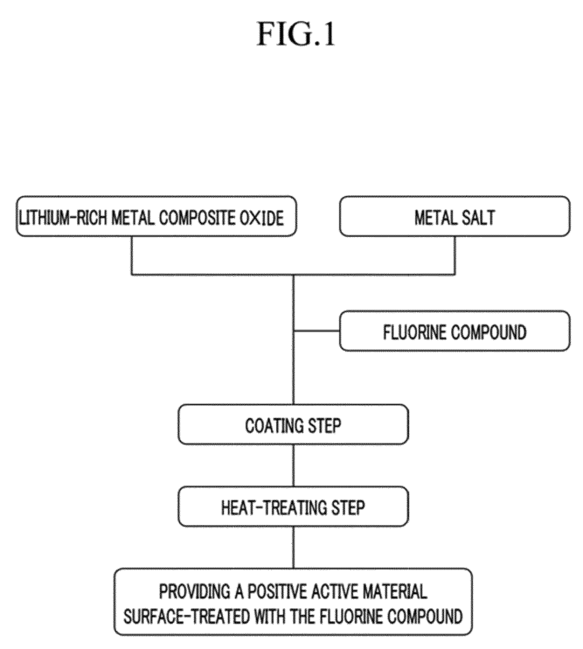

FIG. 1 is a flowchart showing a method of preparing a positive active material surface-treated by coating a fluorine compound thereon.

FIG. 2 shows scanning electron microscope (SEM) photographs and energy dispersive spectroscopy (EDS) analysis of the positive active material according to one embodiment of the present invention.

FIG. 3 shows scanning electron microscope (SEM) photographs and energy dispersive spectroscopy (EDS) analysis of a positive active material according to a comparative example.

FIG. 4 shows charge and discharge experiment results of the positive active materials.

## DETAILED DESCRIPTION

A positive active material for a secondary lithium battery, a preparation method thereof, and a secondary lithium battery including the same are provided.

Hereinafter, embodiments of the present invention are described in detail. However, these embodiments are exemplary, and this disclosure is not limited thereto.

One embodiment of the present invention provides a positive active material for a secondary lithium battery including a lithium metal composite oxide core represented by the following Chemical Formula 1, and a coating layer positioned on the lithium metal composite oxide core and including a fluorine compound.

[Chemical Formula 1] $\quad\quad Li_wNi_xCo_yMn_{1-x-y-z}M_zO_2$

In the above Chemical Formula 1, $1.2 \leq w \leq 1.5$, $0 < x < 1$, $0 \leq y < 1$, $0.5 \leq 1-x-y-z$, and M is at least one metal selected from the group consisting of Al, Mg, Fe, Cu, Zn, Cr, Ag, Ca, Na, K, In, Ga, Ge, V, Mo, Nb, Si, Ti, and Zr.

The lithium metal composite oxide core represented by the above Chemical Formula 1 is a lithium-rich layered metal composite oxide including lithium in an amount of greater than or equal to about 1.2 mol and less than or equal to about 1.5 mol, and has a structure in which a lithium metal composite oxide and $Li_2MnO_3$ form a solid solution. When a battery using the lithium metal composite oxide as a positive active material is charged at about 4.5 to 5.0 V, the $Li_2MnO_3$ is electrochemically activated, realizing discharge capacity of greater than or equal to 220 $mAhg^{-1}$. Herein, the lithium metal composite oxide has a plateau region around about 4.6 to about 5 V, and generates oxygen when charged at a high voltage of greater than or equal to 4.6 V based on a positive electrode potential. The charging is not particularly limited, and may be performed in any conventional method in a related art.

The lithium metal composite oxide core may include nickel, cobalt, and manganese, and the nickel, cobalt, and manganese may be included in a mole ratio appropriately adjusted depending on a purpose. The manganese may be included in an amount of greater than and equal to 0.5 mol based on the total weight of the metals except for lithium, and thus improves structural stability of the lithium metal composite oxide, and may also be partly substituted with other elements to prolong cycle-life characteristics. The substituted metal elements may include a transition metal, a rare earth element, or the like, and for example, at least one metal selected from the group consisting of Al, Mg, Fe, Cu, Zn, Cr, Ag, Ca, Na, K, In, Ga, Ge, V, Mo, Nb, Si, Ti, and Zr may be used.

The lithium metal composite oxide core may be prepared in a method of preparing a precursor for a secondary lithium battery including: a) preparing a metal composite aqueous solution by adding a nickel raw material, a cobalt raw material, and a manganese raw material in a desired equivalent ratio to an aqueous solution in a co-precipitation reactor; b) adjusting a distribution degree of manganese ions by adding an ammonia solution and sodium hydroxide to the metal composite aqueous solution and agitating the mixed solution while maintained a pH of 10 to 12; and c) aging the solution at a predetermined temperature for a predetermined time.

The nickel raw material may be, for example, a nickel sulfate salt, a nickel nitrate salt, a nickel hydrochlorate salt, a nickel acetate salt, and the like, the cobalt raw material may be, for example, a cobalt sulfate salt, a cobalt nitrate salt, a cobalt hydrochlorate salt, a cobalt acetate salt, and the like, and the manganese raw material may be, for example, a manganese sulfate salt, a manganese nitrate salt, a manganese hydrochlorate salt, a manganese acetate salt, and the like.

In the method of preparing a positive active material precursor for a secondary lithium battery precursor, the adjustment of distribution degree of manganese ions in a precursor particle may be performed by using various factors such as shape of a co-precipitation reactor, a ratio between diameter and depth of the co-precipitation reactor, an agitation speed (rpm), pH of a reaction solution, and the like.

In the step b) of the method of preparing a precursor for a secondary lithium battery, the solution may be agitated at about 1000 to about 3000 rpm. When the agitation speed is set at less than 1000 rpm during the preparation of a co-precipitation precursor, the agitation may not be uniformly performed and may remarkably deteriorate internal composition uniformity, while when the agitation is set at greater than 3000 rpm, the spherically-produced precursor may be destroyed.

In the step c) of the method of preparing a precursor for a secondary lithium battery, the solution may be aged at about 10 °C to about 60 °C for 4 to 20 hours, for example, at about 30 °C for about 10 hours. When the temperature is set at greater than 60 °C during the preparation of a co-precipitation precursor, the added ammonia solution may be constantly volatilized and thus may cause difficulty in controlling pH, and when the aging is performed for greater than 20 hours, there may be a problem of decreasing productivity, and simultaneously a problem of excessive growth of spherical particles, thus destroying the spherical shape.

The fluorine compound that coats the lithium metal composite oxide core may be one or more selected from the group consisting of $CsF$, $KF$, $LiF$, $NaF$, $RbF$, $TiF$, $AgF$, $AgF_2$, $BaF_2$, $CaF_2$, $CuF_2$, $CdF_2$, $FeF_2$, $HgF_2$, $Hg_2F_2$, $MnF_2$, $MgF_2$, $NiF_2$, $PbF_2$, $SnF_2$, $SrF_2$, $XeF_2$, $ZnF_2$, $AlF_3$, $BF_3$, $BiF_3$, $CeF_3$, $CrF_3$, $DyF_3$, $EuF_3$, $GaF_3$, $GdF_3$, $FeF_3$, $HoF_3$, $InF_3$, $LaF_3$, $LuF_3$, $MnF_3$, $NdF_3$, $VOF_3$, $PrF_3$, $SbF_3$, $ScF_3$, $SmF_3$, $TbF_3$, $TiF_3$, $TmF_3$, $YF_3$, $YbF_3$, $TlF_3$, $CeF_3$, $GeF_3$, $HfF_3$, $SiF_3$, $SnF_3$, $TiF_4$, $VF_4$, $ZrF_4$, $NbF_5$, $SbF_5$, $TaF_5$, $BiF_5$, $MoF_5$, $ReF_5$, $SF_5$, and $WF_5$, for example $AlF_3$, $BF_3$, $ZrF_4$, and the like.

In one embodiment of the present invention, the fluorine compound may be coated to be about 5 to about 20 nm thick on the surface of the lithium metal composite oxide, and the coating layer may be formed by dipping the lithium metal composite oxide in a fluorine compound aqueous solution obtained by mixing a metal salt-including solution and a fluoro-based compound-including solution, spraying the fluorine compound aqueous solution onto the lithium metal composite oxide and drying it, or using any other conventional coating method. When the coating layer has a thickness of about 5 to about 20 nm, conductivity of a positive active material may not only be decreased, but manganese elution may also be suppressed.

When the coating layer has a thickness of less than or equal to 5 nm, the manganese elution may not be effectively suppressed due to a relatively low distribution degree of the coating layer on the surface, while when the coating layer has a thickness of greater than or equal to 20 nm, the coating layer may hardly pass lithium ions and thus limits electrochemical activation at the first charge as well as output characteristics.

The coating layer may be about 0.2 to about 1.5 wt% based on the total weight of the lithium metal composite oxide core.

The coating layer may further include $ZrO_2$, $SnO_2$, or a mixture thereof.

The lithium metal composite oxide core may have an average particle diameter (D50) of about 10 to about 20 $\mu$m. When the positive active material has an average particle diameter within the range, the positive active material may have a uniform particle distribution, a high sphericality degree, and high internal dimension density and thus realize a secondary lithium battery having high discharge capacity.

In the above Chemical Formula 1, w may be 1.3 to 1.5, and the lithium metal composite oxide core may be one selected from $Li_{1.3}Ni_{0.2}Co_{0.1}Mn_{0.7}O_2$, $Li_{1.3}Ni_{0.25}Mn_{0.75}O_2$, $Li_{1.3}Ni_{0.25}Co_{0.05}Mn_{0.7}O_2$, and $Li_{1.3}Ni_{0.2}Co_{0.1}Al_{0.05}Mn_{0.65}O_2$. In this way, when lithium is included in an amount of greater than or equal to about 1.2 mol, for example, greater than or equal to about 1.3 mol, a high-capacity positive active material may be provided.

Yet another embodiment of the present invention provides a method of preparing a positive active material including a lithium metal composite oxide core and a fluorine compound coating layer.

Specifically, the method of preparing a positive active material includes: a) providing lithium metal composite oxide core represented by the following Chemical Formula 1.

$$[\text{Chemical Formula 1}] \qquad Li_wNi_xCo_yMn_{1-x-y-z}M_zO_2$$

wherein, in the above Chemical Formula 1, $1.2 \leq w \leq 1.5$, $0 < x < 1$, $0 \leq y < 1$, $0.5 \leq 1-x-y-z$, and M is at least one metal selected from the group consisting of Al, Mg, Fe, Cu, Zn, Cr, Ag, Ca, Na, K, In, Ga, Ge, V, Mo, Nb, Si, Ti, and Zr;

b) preparing a solution including a fluorine compound; c) coating a) the lithium metal composite oxide core with b) the fluorine compound-including solution; and d) heat-treating the coated lithium metal composite oxide formed in the step c).

After coating the lithium metal composite oxide with the fluorine compound-including solution in the step c), the solution may be evaporated at about 120 to about 150 °C.

The heat-treating of the step d) may be performed at about 380 to about 460 °C for about 1 to about 10 hours.

In the step b), the lithium metal composite oxide core may be coated to be about 5 to about 20 nm thick. When the coating layer has a thickness of about 5 to about 20 nm, manganese elution may be suppressed without decreasing conductivity of the positive active material, but when the coating layer has a thickness of less than or equal to about 5 nm, the manganese elution may not be effectively suppressed due to relatively decreased distribution of the coating layer on the core, while when the coating layer has a thickness of greater than or equal to about 20 nm, the coating layer may hardly pass lithium ions and thus limits electrochemical activation at the first charge as well as output characteristics.

In the step b), the fluorine compound-including solution may further include $ZrO_2$, $SnO_2$, or a mixture thereof.

Yet another embodiment of the present invention provides a secondary lithium battery including: a positive electrode including a positive active material including a lithium metal composite oxide core represented by the above Chemical Formula 1; a coating layer including a fluorine compound on the lithium metal composite oxide core; a negative electrode including a negative active material being capable of intercalating and deintercalating lithium ions; a separator interposed between the positive and negative electrodes; and a non-aqueous electrolyte, and having discharge capacity of greater than or equal to 220 $mAh/g^{-1}$.

The secondary lithium battery may have any shape such as a coin, a button, a sheet, a cylinder, a prism, and the like. The variously-shaped secondary lithium batteries may be prepared in a conventional method, which will not be illustrated in detail. In addition, manufacture of the positive electrode and constitution of the secondary lithium battery are briefly illustrated, but the present invention is not limited thereto.

The positive electrode may be prepared by dissolving the positive active material along with a conductive material, a binder, and other additives, for example, at least one additive selected from a filler, a dispersing agent, an ion conductive material, a pressure enhancer, and the like in an appropriate organic solvent to prepare a slurry or paste, coating the slurry or paste on a current collector, and drying and compressing it.

The positive electrode includes a current collector and the positive active material layer, and the positive active material layer may be formed by using the positive active material having a coating layer on the surface or by mixing the positive active material with a compound having a coating layer. The coating layer may be formed by using an oxide of Mg, Al, Co, K, Na, Ca, Si, Ti, V, Sn, Ge, Ga, B, As, or Zr, or a mixture thereof, as a coating element compound.

The binder may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves conductivity of an electrode, any electrically conductive material may be used as the conductive material unless it causes a chemical change, and examples thereof may be one or more of natural graphite, artificial graphite, carbon black, acetylene black, ketjen black, a carbon fiber, a metal powder, a metal fiber, and the like of copper, nickel, aluminum, silver, and the like, and a conductive material such as a polyphenylene derivative and the like.

The current collector of the positive electrode may be a foil, a sheet, and the like of copper, nickel, stainless steel, aluminum, and the like, or a carbon fiber and the like.

The negative electrode includes a current collector and a negative active material layer formed on the current collector.

As the negative active material, one or two kinds of a composite oxide and the like of a carbon material such as graphite and the like or a transition metal capable of reversibly intercalating/deintercalating lithium ions may be used. Other than these materials, silicon, tin, and the like may be used as the negative electrode material.

The negative active material layer includes a binder, and may optionally include a conductive material.

The binder improves binding properties of negative active material particles with one another and with a current collector, examples thereof may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Examples of the conductive material may be a carbon-based material such as natural graphite, artificial graphite, carbon black, acetylene black, ketjen black, carbon fiber, and the like; a metal-based material such as a metal powder or a metal fiber and the like of copper, nickel, aluminum, silver, and the like; a conductive polymer such as a polyphenylene derivative and the like; and a mixture thereof.

The negative current collector may be a copper foil, a nickel foil, a stainless steel foil, a titanium foil, a nickel foam, a copper foam, a polymer substrate coated with a conductive metal, or a combination thereof.

The electrolyte includes a non-aqueous organic solvent and a lithium salt.

The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like, and the ester-based solvent may include methyl acetate, ethyl acetate, n-propyl acetate, dimethyl acetate, methyl propionate, ethyl propionate, $\gamma$-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like, and the ketone-based solvent may be cyclohexanone and the like. The alcohol-based solvent may be ethanol, isopropyl alcohol, and the like, and the aprotic solvent may be nitriles of R-CN (R is a C2 to C20 linear, branched, or cyclic structured hydrocarbon group, and may include a double bond aromatic ring or an ether bond) and the like, amides of dimethylformamide and the like, dioxolanes such as 1,3-dioxolane and the like, or sulfolanes and the like.

The non-aqueous organic solvent may be used singularly or in a mixture, and when the organic solvent is used in a mixture, the mixture ratio may be controlled in accordance with a desirable battery performance.

A lithium salt dissolved in such a solvent may include $LiClO_4$, $LiBF_4$, $LiPF_6$, $LiAlCl_4$, $LiSbF_6$, $LiSCN$, $LiCF_3SO_3$, $LiCF_3CO_2$, $Li(CF_3SO_2)_2$, $LiAsF_6$, $LiN(CF_3SO_2)_2$, $LiB_{10}Cl_{10}$, LiBOB (lithium bis(oxalato)borate), a lower aliphatic lithium carbonate, chloroborane lithium, imides of $LiN(CF_3SO_2)$, $Li(C_2F_5SO_2)$, $LiN(CF_3SO_2)_2$, $LiN(C_2F_5SO_2)_2$, $LiN(CF_3SO_2)(C_4F_9SO_2)$, and the like. These lithium salts may be used alone or may be randomly combined in an electrolyte solution and the like unless they damage the effect of the present invention. Particularly, $LiPF_6$ may be

preferably included. In addition, carbon tetrachloride, trifluorochloroethylene, or a phosphate salt and the like including phosphorus may be included in the electrolyte solution so as to make the electrolyte solution nonflammable.

The separator may be polyethylene, polypropylene, polyvinylidene fluoride, or a multi-layer of the above, and a mixed multi-layer such as a polyethylene/polypropylene double-layered separator, a polyethylene/polypropylene/polyethylene triple-layered separator, a polypropylene/polyethylene/polypropylene triple-layered separator, and the like may be used.

Hereinafter, examples of the present invention and comparative examples are described. These examples, however, are not in any sense to be interpreted as limiting the scope of the invention.

Example 1

**Manufacture of Lithium Metal Composite Oxide Core**

AIM metal composite aqueous solution was prepared by adding nickel sulfate salt, cobalt sulfate salt, and manganese sulfate salt in a mole ratio of 0.20:0.10:0.70 to water in a co-precipitation reactor at a speed of 10 mL/min. Then, a 1 M ammonia solution was added to the obtained metal composite aqueous solution in the co-precipitation reactor at a speed of 5 mL/min, and sodium hydroxide was added thereto while pH of the mixture was maintained to be 11 by using a pH controller, and herein, the co-precipitation reactor had a cylindrical structure, and the diameter and depth of the co-precipitation reactor were appropriately adjusted. The metal composite aqueous solution was agitated at 1000 rpm and aged for 10 hours, obtaining a spherical shape precursor. The obtained precursor was washed with ultra pure water at greater than or equal to 30 °C until its pH became less than or equal to 8, and was dried at 80 °C for 12 hours. Lithium carbonate was added in an equivalent ratio of 1.3 with the dried co-precipitation precursor. The mixture was heat-treated at 900 °C for 10 hours in the air, preparing $Li_{1.3}Ni_{0.2}Co_{0.1}Mn_{0.7}O_2$.

**Coating of Lithium Metal Composite Oxide Core**

A uniform mixed solution was obtained by dissolving an aqueous solution including $NH_4F$ (Sigma-Aldrich Co. Ltd.) in an aqueous solution including an aluminum salt and agitating the mixture for greater than or equal to 10 minutes. The mixed solution was spray-coated on the prepared $Li_{1.3}Ni_{0.2}Co_{0.1}Mn_{0.7}O_2$ and then heat-treated under an in an inert atmosphere at 400 °C for 5 hours. The coating layer coated on a positive active material according to the preparing method was 10 nm thick and was 0.5 wt% based on the total amount of the lithium metal composite oxide.

**Manufacture of Secondary Lithium Battery Cell**

The positive active material was allocated to have an average particle diameter of 25 $\mu$m, and then 90 wt% of the positive active material, 5 wt% of acetylene black as a conductive material, and 5 wt% of polyvinylidene fluoride (PVdF) as a binder were dissolved in N-methyl-2-pyrrolidone (NMP), preparing a slurry. This slurry was coated on a 20 $\mu$m-thick aluminum foil, dried and compressed with a press, and then dried in a vacuum at 120 °C for 16 hours, preparing a disk electrode having a diameter of 16 mm. As a counter electrode, a lithium metal film punched to have a diameter of 16 mm was used, and a PP film was used for a separation membrane. An electrolyte solution was prepared by mixing ethylene carbonate (EC)/dimethylether (DME) in a ratio of 1:1 (v/v) and dissolving 1 M $LiPF_6$ therein. The electrolyte solution was impregnated into a separation membrane, the separation membrane was inserted between a working electrode and a counter electrode, and a CR2032 SUS case was used, preparing a secondary lithium battery cell.

**Example 2**

A positive active material and a secondary battery cell were prepared according to the same method as Example 1, except for using 1.0 wt% of the coating layer based on the total amount of the lithium metal composite oxide.

**Comparative Example 1**

$Li_{1.3}Ni_{0.2}Co_{0.1}Mn_{0.7}O_2$ was prepared according to the same method as Example 1, except for dissolving an aqueous solution including $NH_4F$ (Sigma-Aldrich Co. Ltd.) in an aqueous solution including an aluminum salt, agitating the solution for greater than or equal to 10 minutes, and coating the lithium metal composite oxide with the uniform mixed solution, preparing a secondary battery cell including the same.

**Comparative Example 2**

A positive active material and a secondary battery cell including the same were prepared according to the same method as Example 1, except for heating the coated lithium metal composite oxide at 350 °C.

**Comparative Example 3**

A positive active material and a secondary battery cell including the same were prepared according to the same method as Example 1, except for heat-treating the coated lithium metal composite oxide at 400 °C.

**Comparative Example 4**

A positive active material and a secondary battery cell including the same were prepared according to the same method as Example 2, except for heat-treating the coated lithium metal composite oxide at 350 °C.

**Comparative Example 5**

A positive active material and a secondary battery cell including the same were prepared according to the same method as Example 2, except for heat-treating the coated lithium metal composite oxide at 400 °C.

Experiment conditions of Examples 1 and 2 and Comparative Examples 1 to 5, a kind of fluorine compound included in a coating layer, and amount (wt%) of the coating layer based on the total amount of a core are provided in the following Table 1.

**[Table 1]**

| | Fluorine compound | Amount of coating layer (wt%) | Heat-treating temperature after coating (°C) |
|---|---|---|---|
| Example 1 | $AlF_3$ | 0.5 | 400 ° C |
| Example 2 | $AlF_3$ | 1.0 | 400 ° C |
| Comparative Example 1 | N | 0.0 | N |
| Comparative Example 2 | $AlF_3$ | 0.5 | 350 ° C |
| Comparative Example 3 | $AlF_3$ | 0.5 | 450 ° C |
| Comparative Example 4 | $AlF_3$ | 1.0 | 350 ° C |
| Comparative Example 5 | $AlF_3$ | 1.0 | 450 ° C |

**Experimental Example**

SEM Photograph and EDS Analysis

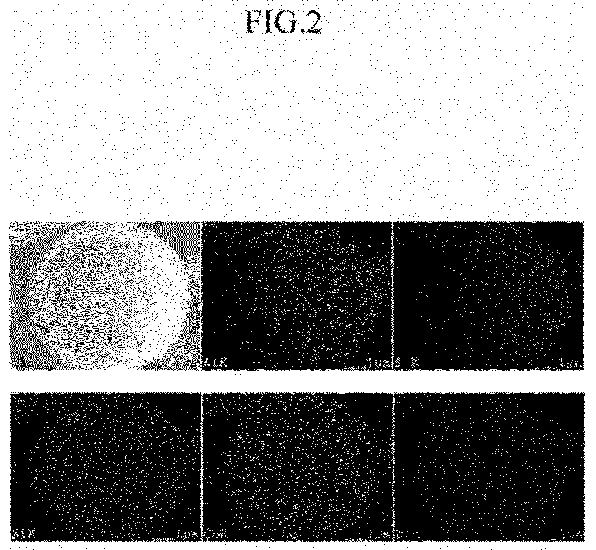

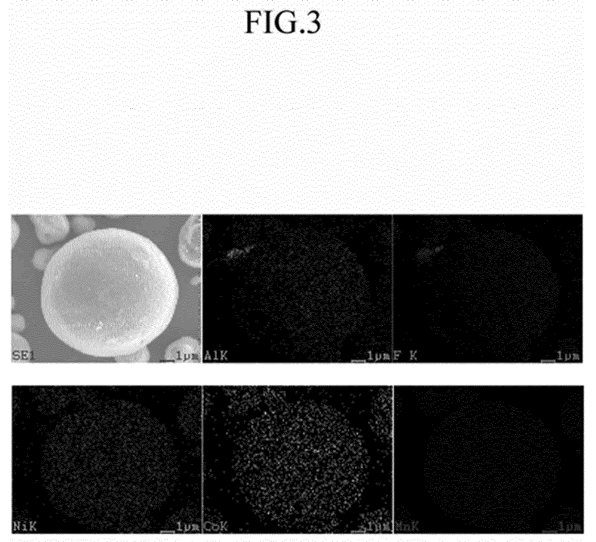

The co-precipitation precursors of Example 1 and Comparative Example 2 were photographed with a SEM using JSM-7000F (Jeol Ltd.) equipment, energy dispersive spectroscopy (EDS, Oxford) analysis was performed to measure polydispersity of metals (Mn, Co, Ni, Al, and F) on the surface of the positive active materials, and the results are provided in FIGS. 2 and 3.

The positive active materials shown in FIGS. 2 and 3 included a lithium metal composite oxide as a core and a coating layer including a fluorine compound on the surface of the core. Comparing FIG. 2 with FIG. 3, the positive active material of Example 1 showed more uniform distribution of Al and F elements than the positive active material of Comparative Example 1. Accordingly, the positive active material of Example 1 showed that the coating layer including a fluorine compound was further uniformly formed.

**Battery Capacity**

The secondary lithium battery cells according to Examples 1 and 2 and Comparative Examples 1 to 5 were charged at a constant current of 25 mA/g up to 4.6 V at 25 ° C and at a constant voltage of 4.6 V to 2.5 mA/g, and then discharged at a constant current of 25 mA/g down to 2.0 V, and capacity of the battery cells was measured.

**Cycle Characteristics**

The secondary lithium battery cells according to Examples 1 and 2 and Comparative Examples 1 to 5 were repeatedly charged and discharged 30 times. Specifically, the secondary lithium battery cells according to Examples 1 and 2 and Comparative Examples 1 to 5 were charged at a constant current of 25 mA/g up to a voltage of 4.6 at 60 ° C and at a constant voltage of 4.6 V to a current of 5 mA/g, and then discharged at a constant current of 25 mA/g down to a voltage of 2.0 V. The charge and discharge as one cycle was repeated 30 times, and capacity retention of the battery cells was evaluated. The capacity retention was calculated according to the following formula.

the following formula.

$$\text{Capacity Retention (\%)} = \text{Capacity at 30th cycle} / \text{Capacity at 1st cycle} \times 100$$

The experiment results of discharge capacity and 30 cycle capacity retention of the secondary lithium battery cells according to Examples 1 and 2 and Comparative Examples 1 to 5 are provided in the following table.

[Table 2]

|  | Initial discharge capacity at 25 °C (mAh/g$^{-1}$) | 30 cycle capacity retention at 60 °C (%) |
|---|---|---|
| Example 1 | 234 | 90.4 |
| Example 2 | 226 | 90.2 |
| Comparative Example 1 | 240 | 81.7 |
| Comparative Example 2 | 231 | 85.8 |
| Comparative Example 3 | 238 | 84.1 |
| Comparative Example 4 | 215 | 86.4 |
| Comparative Example 5 | 224 | 85.4 |

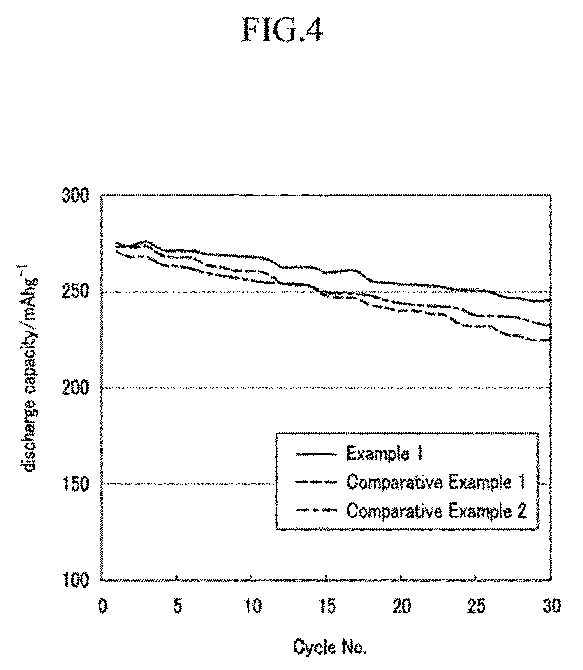

As shown in Table 2, the secondary lithium battery cells according to Examples 1 and 2 showed high initial discharge capacity of greater than or equal to 220 mAhg$^{-1}$, and considerably high capacity retention of greater than or equal to 90 % after 30 cycles. On the contrary, the positive active material including no coating layer according to Comparative Example 1 showed high initial discharge capacity of 240 mA/g$^{-1}$, but very low initial discharge capacity of 81.7 % after 30 cycles. Accordingly, the positive active material including a lithium-rich metal composite oxide coated with a fluorine compound showed improved cycle-life characteristics. FIG. 4 is a graph showing cycle characteristics of the positive active materials according to Example 1 and Comparative Examples 1 and 2.

As shown in Table 2, the positive active materials of Examples 1 and 2 showed excellent cycle characteristics compared with the positive active materials of Comparative Examples 2 to 5. The positive active materials of Examples 1 and 2 showed capacity retention of greater than or equal to 90 %, while the positive active materials of Comparative Examples 2 to 5 showed only capacity retention of about 81 to 85 %. The reason it that a fluorine compound was uniformly coated on a lithium metal composite oxide core in the positive active material of the present invention, and when the core was uniformly coated with a coating layer, the coating layer prevented a side reaction between the lithium-rich layer-based metal composite oxide and an electrolyte solution and improved cycle characteristics.

Exemplary embodiments of the present invention illustrated in the specification and drawings are provided to facilitate understanding but do not limit the range of the present invention, as defined by the claims. Other exemplary variations based on a technology of the present invention other than the exemplary embodiments are clearly understood and accepted by those who have ordinary skill in this art to the present invention.

**Claims**

1.  A positive active material for a secondary lithium battery, comprising:

    a lithium metal composite oxide core represented by the following Chemical Formula 1; and
    a coating layer positioned on the lithium metal composite oxide core and comprising a fluorine compound:

    [Chemical Formula 1]    $Li_wNi_xCo_yMn_{1-x-y-z}M_zO_2$

    **characterised in that**, in the above Chemical Formula 1, $1.3 \leq w \leq 1.5$, $0 < x < 1$, $0 \leq y < 1$, $0.5 \leq 1-x-y-z$, and M is at least one metal selected from the group consisting of Al, Mg, Fe, Cu, Zn, Cr, Ag, Ca, Na, K, In, Ga, Ge, V, Mo, Nb, Si, Ti, and Zr.

2.  The positive active material for a secondary lithium battery of claim 1, wherein the fluorine compound is one or more selected from the group consisting of $CsF$, $KF$, $LiF$, $NaF$, $RbF$, $TiF$, $AgF$, $AgF_2$, $BaF_2$, $CaF_2$, $CuF_2$, $CdF_2$, $FeF_2$, $HgF_2$, $Hg_2F_2$, $MnF_2$, $MgF_2$, $NiF_2$, $PbF_2$, $SnF_2$, $SrF_2$, $XeF_2$, $ZnF_2$, $AlF_3$, $BF_3$, $BiF_3$, $CeF_3$, $CrF_3$, $DyF_3$, $EuF_3$, $GaF_3$, $GdF_3$, $FeF_3$, $HoF_3$, $InF_3$, $LaF_3$, $LuF_3$, $MnF_3$, $NdF_3$, $VOF_3$, $PrF_3$, $SbF_3$, $ScF_3$, $SmF_3$, $TbF_3$, $TiF_3$, $TmF_3$, $YF_3$, $YbF_3$, $TlF_3$, $CeF_3$, $GeF_3$, $HfF_3$, $SiF_3$, $SnF_3$, $TiF_4$, $VF_4$, $ZrF_4$, $NbF_5$, $SbF_5$, $TaF_5$, $BiF_5$, $MoF_5$, $ReF_5$, $SF_5$, and $WF_5$.

3.  The positive active material of claim 1, wherein the coating layer is included in an amount of 0.2 wt% to 1.5 wt% based on the total weight of the lithium metal composite oxide core.

4.  The positive active material of claim 1, wherein the coating layer has a thickness of 5 nm to 20 nm.

5.  The positive active material of claim 1, wherein the coating layer further comprises $ZrO_2$, $SnO_2$, or a mixture thereof.

6.  The positive active material of claim 1, wherein the lithium metal composite oxide core has an average particle diameter (D50) of 10 $\mu$m to 20 $\mu$m.

7.  The positive active material of claim 1, wherein the lithium metal composite oxide core is one selected from the group consisting of $Li_{1.3}Ni_{0.2}Co_{0.1}Mn_{0.7}O_2$, $Li_{1.3}Ni_{0.25}Mn_{0.75}O_2$, $Li_{1.3}Ni_{0.25}Co_{0.05}Mn_{0.7}O_2$, and $Li_{1.3}Ni_{0.2}Co_{0.1}Al_{0.05}Mn_{0.65}O_2$.

8.  A method of preparing the positive active material for a secondary lithium battery, comprising

    a) preparing a lithium metal composite oxide core represented by the following Chemical Formula 1

    $Li_wNi_xCo_yMn_{1-x-y-z}M_zO_2$

    wherein, in the above Chemical Formula 1, $1.3 \leq w \leq 1.5$, $0 < x < 1$, $0 \leq y < 1$, $0.5 \leq 1-x-y-z$, and M is at least one metal selected from the group consisting of Al, Mg, Fe, Cu, Zn, Cr, Ag, Ca, Na, K, In, Ga, Ge, V, Mo, Nb, Si, Ti, and Zr;
    b) preparing a solution including a fluorine compound;
    c) coating a) the lithium metal composite oxide core b) the solution comprising a fluorine compound; and
    d) heat-treating the coated lithium metal composite oxide in the step c).

9.  The method of claim 8, wherein the coating step c) comprises evaporation of the solution at a temperature of 120° C to 150° C, after coating the lithium metal composite oxide with the solution including a fluorine compound.

10. The method of claim 8, wherein the heat-treatment is performed at 380° C to 460° C under an inert atmosphere for 1 to 10 hours in the step (d).

11. The method of claim 8, wherein the solution of b) is coated to be 5 nm to 20 nm thick on the lithium metal composite oxide core.

12. The method of claim 8, wherein the solution including a fluorine compound in b) additionally comprises $ZrO_2$, $SnO_2$, or a mixture thereof.

13. A secondary lithium battery, comprising:

a positive electrode including the positive active material of any one of claim 1 to claim 7;

a negative electrode including a negative active material being capable of intercalating and deintercalating lithium ions;

a separator interposed between the positive electrode and the negative electrode; and

a non-aqueous electrolyte.

**Patentansprüche**

1. Ein positives, aktives Material für eine sekundäre Lithiumbatterie, umfassend:

   einen Lithiummetallkompositoxidkern dargestellt durch die folgende Chemische Formel 1; und

   eine Beschichtungsschicht, die auf dem Lithiummetallkompositoxidkern positioniert ist und eine Fluorverbindung umfasst:

   [Chemische Formel 1]     $Li_wNi_xCo_yMn_{1-x-y-z}M_zO_2$

   **dadurch gekennzeichnet, dass** in der obigen Chemischen Formel 1 $1,3 \leq w < 1,5$, $0 < x < 1$, $0 \leq y < 1$, $0,5 \leq 1-x-y-z$ und M mindestens eine Metall ausgewählt aus der Gruppe bestehend aus Al, Mg, Fe, Cu, Zn, Cr, Ag, Ca, Na, K, In, Ga, Ge, V, Mo, Nb, Si, Ti und Zr ist.

2. Das positive, aktive Material für eine sekundäre Lithiumbatterie gemäß Anspruch 1, wobei die Fluorverbindung eine oder mehrere ausgewählt aus der Gruppe bestehend aus $CsF$, $KF$, $LiF$, $NaF$, $RbF$, $TiF$, $AgF$, $AgF_2$, $BaF_2$, $CaF_2$, $CuF_2$, $CdF_2$, $FeF_2$, $HgF_2$, $Hg_2F_2$, $MnF_2$, $MgF_2$, $NiF_2$, $PbF_2$, $SnF_2$, $SrF_2$, $XeF_2$, $ZnF_2$, $AlF_3$, $BF_3$, $BiF_3$, $CeF_3$, $CrF_3$, $DyF_3$, $EuF_3$, $GaF_3$, $GdF_3$, $FeF_3$, $HoF_3$, $InF_3$, $LaF_3$, $LuF_3$, $MnF_3$, $NdF_3$, $VOF_3$, $PrF_3$, $SbF_3$, $ScF_3$, $SmF_3$, $TbF_3$, $TiF_3$, $TmF_3$, $YF_3$, $YbF_3$, $TlF_3$, $CeF_3$, $GeF_3$, $HfF_3$, $SiF_3$, $SnF_3$, $TiF_4$, $VF_4$, $ZrF_4$, $NbF_5$, $SbF_5$, $TaF_5$, $BiF_5$, $MoF_5$, $ReF_5$, $SF_5$ und $WF_5$ ist.

3. Das positive, aktive Material gemäß Anspruch 1, wobei die Beschichtungsschicht in einer Menge von 0,2 Gew.-% bis 1,5 Gew.-%, basierend auf dem Gesamtgewicht des Lithiummetallkompositoxidkerns, beinhaltet ist.

4. Das positive, aktive Material gemäß Anspruch 1, wobei die Beschichtungsschicht eine Dicke von 5 nm bis 20 nm hat.

5. Das positive, aktive Material gemäß Anspruch 1, wobei die Beschichtungsschicht des Weiteren $ZrO_2$, $SnO_2$ oder eine Mischung davon umfasst.

6. Das positive, aktive Material gemäß Anspruch 1, wobei der Lithiummetallkompositoxidkern einen mittleren Teilchendurchmesser (D50) von 10 $\mu$m bis 20 $\mu$m hat.

7. Das positive, aktive Material gemäß Anspruch 1, wobei der Lithiummetallkompositoxidkern einer ausgewählt aus der Gruppe bestehend aus $Li_{1,3}Ni_{0,2}Co_{0,1}Mn_{0,7}O_2$, $Li_{1,3}Ni_{0,25}Mn_{0,75}O_2$, $Li_{1,3}Ni_{0,25}Co_{0,05}Mn_{0,7}O_2$ und $Li_{1,3}Ni_{0,2}Co_{0,1}Mn_{0,65}O_2$ ist.

8. Ein Verfahren zur Herstellung des positiven, aktiven Materials für eine sekundäre Lithiumbatterie, umfassend:

   a) Herstellen eines Lithiummetallkompositoxidkerns dargestellt durch die folgende Chemische Formel 1

   $$Li_wNi_xCo_yMn_{1-x-y-z}M_zO_2$$

   wobei, in der obigen Chemischen Formel 1, $1,3 \leq w \leq 1,5$, $0 < x < 1$, $0 \leq y < 1$, $0,5 \leq 1-x-y-z$ und M mindestens eine Metall ausgewählt aus der Gruppe bestehend aus Al, Mg, Fe, Cu, Zn, Cr, Ag, Ca, Na, K, In, Ga, Ge, V, Mo, Nb, Si, Ti und Zr ist;

   b) Herstellen einer Lösung enthaltend eine Fluorverbindung;

   c) Beschichten a) des Lithiummetallkompositoxidkerns b) der Lösung umfassend eine Fluorverbindung; und

   d) Hitze-Behandeln des beschichteten Lithiummetallkompositoxidkerns in Schritt c).

9. Das Verfahren gemäß Anspruch 8, wobei der Beschichtungsschritt c) das Verdampfen der Lösung bei einer Temperatur von 120 °C bis 150 °C nach dem Beschichten des Lithiummetallkompositoxidkerns mit der Lösung enthaltend eine Fluorverbindung umfasst.

**10.** Das Verfahren gemäß Anspruch 8, wobei die Hitze-Behandlung bei 380 °C bis 460 °C unter einer inerten Atmosphäre für 1 bis 10 Stunden in Schritt d) vorgenommen wird.

**11.** Das Verfahren gemäß Anspruch 8, wobei die Lösung von b) aufgeschichtet wird, um 5 nm bis 20 nm dick auf dem Lithiummetallkompositoxidkern zu sein.

**12.** Das Verfahren gemäß Anspruch 8, wobei die Lösung enthaltend eine Fluorverbindung in b) zusätzlich $ZrO_2$, $SnO_2$ oder eine Mischung davon umfasst.

**13.** Eine sekundäre Lithiumbatterie, umfassend:

eine positive Elektrode enthaltend das positive, aktive Material gemäß einem der Ansprüche 1 bis 7;
eine negative Elektrode enthaltend ein negatives, aktives Material, das in der Lage ist, Lithiumionen zu interkalieren und zu deinterkalieren;
einen zwischen der positiven Elektrode und der negativen Elektrode zwischengeschalteten Abscheider; und
einen nicht-wässrigen Elektrolyt.

## Revendications

**1.** Matériau actif positif pour une batterie secondaire au lithium, comprenant:

un noyau en oxyde composite lithium-métal représenté par la formule chimique 1 suivante; et
une couche de revêtement positionnée sur le noyau en oxyde composite lithium-métal et comprenant un composé de fluor:

[Formule chimique 1] $Li_wNi_xCo_yMn_{1-x-y-z}M_2O_2$

**caractérisé en ce que** dans la formule chimique 1 ci-dessus, $1,3 \leq w \leq 1,5$, $0<x<1$, $0\leq y<1$, $0,5 \leq 1-x-y-z$, et M est au moins un métal choisi dans le groupe constitué par Al, Mg, Fe, Cu, Zn, Cr, Ag, Ca, Na, K, In, Ga, Ge, V, Mo, Nb, Si, Ti et Zr.

**2.** Matériau actif positif pour une batterie secondaire au lithium selon la revendication 1, dans lequel le composé de fluor est un ou plusieurs éléments choisis dans le groupe constitué par $CsF$, $KF$, $LiF$, $NaF$, $RbF$, $TiF$, $AgF$, $AgF_2$, $BaF_2$, $CaF_2$, $CuF_2$, $CdF_2$, $FeF_2$, $HgF_2$, $Hg_2F_2$, $MnF_2$, $MgF_2$, $NiF_2$, $PbF_2$, $SnF_2$, $SrF_2$, $XeF_2$, $ZnF_2$, $AlF_3$, $BF_3$, $BiF_3$, $CeF_3$, $CrF_3$, $DyF_3$, $EuF_3$, $GaF_3$, $GdF_3$, $FeF_3$, $HoF_3$, $InF_3$, $LaF_3$, $LuF_3$, $MnF_3$, $NdF_3$, $VOF_3$, $PrF_3$, $SbF_3$, $ScF_3$, $SmF_3$, $TbF_3$, $TiF_3$, $TmF_3$, $YF_3$, $YbF_3$, $TlF_3$, $CeF_3$, $GeF_3$, $HfF_3$, $SiF_3$, $SnF_3$, $TiF_4$, $VF_4$, $ZrF_4$, $NbF_5$, $SbF_5$, $TaF_5$, $BiF_5$, $MoF_5$, $ReF_5$, $SF_5$ et $WF_5$.

**3.** Matériau actif positif selon la revendication 1, dans lequel la couche de revêtement est incluse dans une quantité de 0,2 % en poids à 1,5 % en poids par rapport au poids total du noyau en oxyde composite lithium-métal.

**4.** Matériau actif positif selon la revendication 1, dans lequel la couche de revêtement a une épaisseur de 5 nm à 20 nm.

**5.** Matériau actif positif selon la revendication 1, dans lequel la couche de revêtement comprend en outre du $ZrO_2$, du $SnO_2$, ou un mélange de ceux-ci.

**6.** Matériau actif positif selon la revendication 1, dans lequel le noyau en oxyde composite lithium-métal a un diamètre moyen de particule (D50) de 10 $\mu$m à 20 $\mu$m.

**7.** Matériau actif positif selon la revendication 1, dans lequel le noyau en oxyde composite lithium-métal est un élément choisi dans le groupe constitué par $Li_{1,3}Ni_{0,2}Co_{0,1}Mn_{0,7}O_2$, $Li_{1,3}Ni_{0,25}Mn_{0,75}O_2$, $Li_{1,3}Ni_{0,25}Co_{0,05}Mn_{0,7}O_2$ et $Li_{1,3}Ni_{0,2}Co_{0,1}Al_{0,05}Mn_{0,65}O_2$.

**8.** Procédé de préparation du matériau actif positif pour une batterie secondaire au lithium, comprenant

a) la préparation d'un noyau en oxyde composite lithium-métal représenté par la formule chimique 1 suivante

$$Li_wNi_xCoyMn_{1-x-y-z}M_zO_2$$

dans laquelle, dans la formule chimique 1 ci-dessus, $1,3 \leq w \leq 1,5$, $0 < x < 1$, $0 \leq y < 1$, $0,5 \leq 1-x-y-z$, et M est au moins un métal choisi dans le groupe constitué par Al, Mg, Fe, Cu, Zn, Cr, Ag, Ca, Na, K, In, Ga, Ge, V, Mo, Nb, Si, Ti et Zr.
b) la préparation d'une solution incluant un composé de fluor;
c) le revêtement a) du noyau en oxyde composite lithium-métal, b) de la solution comprenant un composé de fluor; et
d) le traitement thermique de l'oxyde composite lithium-métal revêtu à l'étape c).

9. Procédé selon la revendication 8, dans lequel l'étape de revêtement c) comprend l'évaporation de la solution à une température de 120 °C à 150 °C, après revêtement de l'oxyde composite lithium-métal avec la solution incluant un composé de fluor.

10. Procédé selon la revendication 8, dans lequel le traitement thermique est réalisé à 380 °C à 460 °C dans une atmosphère inerte pendant 1 à 10 heures à l'étape (d).

11. Procédé selon la revendication 8, dans lequel la solution de b) est revêtue pour avoir une épaisseur de 5 nm à 20 nm sur le noyau en oxyde composite lithium-métal.

12. Procédé selon la revendication 8, dans lequel la solution incluant un composé de fluor en b) comprend en outre du $ZrO_2$, du $SnO_2$, ou un mélange de ceux-ci.

13. Batterie secondaire au lithium, comprenant:

une électrode positive comportant le matériau actif positif de l'une quelconque de la revendication 1 à la revendication 7;
une électrode négative comportant un matériau actif négatif capable d'intercaler et de désintercaler des ions lithium;
un séparateur interposé entre l'électrode positive et l'électrode négative; et
un électrolyte non aqueux.

# FIG.1

# FIG.2

# FIG.3

# FIG.4

**EP 2 763 218 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20080099132 A
- US 2007160906 A1
- US 2011017528 A1
- JP 2003346806 A
- EP 1447866 A1